# EUROPEAN PATENT APPLICATION

(11) **EP 1 933 312 A1**
(43) Date of publication of application: **18.06.2008**
(21) Application number: 06126258.0
(22) Date of filing: 15.12.2006
(51) Int. Cl.: G11B 7/007, G11B 7/24

(54) **Optical storage medium and respective apparatus for recording and/or reading data**

(71) Applicant: Deutsche Thomson OHG, 30625 Hannover (DE)
(72) Inventor: Pilard, Gael, 78087, Mönchweiler (DE)
(74) Representative: Arnold, Klaus-Peter

(57) **Abstract**

The optical storage medium (1) comprises a read-only region with a substrate layer (2), an information layer (3), and a mask layer (4) with a phase change material for providing a super resolution near field effect, which layers are arranged as a stack of layers, and a re-writable region comprising a layer with a tracking structure for providing a tracking information. The tracking structure is covered by the mask layer (4) for using the mask layer as the information layer of the re-writable region. The optical storage medium is in particular an optical disc and the re-writable region a reserved area and/or an inner area of the optical disc. The apparatus for recording and/or reading data from the optical disc comprises a pickup unit providing a laser beam for reading data from the read-only region with the super resolution near-field layer of the optical storage medium, and uses this laser beam for recording and/or reading data on the information layer of the re-writable region. The pickup unit comprises in particular a Blu-ray disc type pickup in accordance with the Blu-ray disc system.

## Description

### TECHNICAL FIELD OF THE INVENTION

The present invention relates to an optical storage medium, in particular an optical disc, which uses a super resolution near field structure effect for storing data with a high data density in a read-only region, and further to an apparatus for recording and/or reading data from the storage medium.

### BACKGROUND OF THE INVENTION

Optical storage media are media in which data are stored in an optically readable manner, for example by means of a laser beam, and a photo-detector integrated with the laser within a pickup is used for detecting the reflected light of the laser beam when reading the data. In the meanwhile a large variety of optical storage media are known, which are operated with different laser wavelength, and which have different sizes for providing storage capacities from below one Gigabyte up to 50 Gigabyte (GB). The formats include read-only formats such as Audio CD and Video DVD, write-once optical media such as CD-R and DVD-R, DVD+R as well as rewritable formats like CD-RW, DVD-RW, DVD+RW and DVD-RAM for example. Digital data are stored on these media along tracks in one or more layers of the media.

The storage medium with the highest data capacity is at present the Blu-Ray disc (BD), which allows to store 50 GB on a dual layer disc. Available formats are at present read-only BD-ROM, re-writable BD-RE and write once BD-R discs. For reading and writing of a Blu-Ray disc an optical pickup with a laser wavelength of 405 nm is used. On the Blu-Ray disc a track pitch of 320 nm and a mark length from 2T to 8T + 9T is used, where T is the channel bit length, and which corresponds with a minimum mark length of 138 - 160 nm. The re-writable BD-RE disc is based on a phase change technology comprising a phase change layer, which uses for example a compound of AgInSbTe or GeSbTe. Further information about the Blu-Ray disc system is available for example from the Blu-Ray group via internet: www.blu-raydisc.com.

New optical storage media with a super resolution near-field structure (Super-RENS) offer the possibility to increase the data density of the optical storage medium by a factor of four in one dimension in comparison with the Blu-Ray disc. This is possible by a so-called Super-RENS structure or layer, which is placed above an information layer of the optical storage medium, and which significantly reduces the effective size of a light spot used for reading from or writing to the optical storage medium. The super resolution layer is also called a mask layer because it is arranged above the data layer and only the high intensity center part of a laser beam can penetrate the mask layer.

The Super-RENS effect allows to record and read data stored in marks of an optical disc, which have a size below the resolution limit of a laser beam used for reading or writing the data on the disc. As known, the diffraction limit of the resolution of the laser beam is lambda/4 NA, where lambda is the wavelength and NA the numerical aperture of the objective lens of the optical pickup.

A Super-RENS optical disc comprising a super resolution near-field structure formed of a metal oxide or a polymer compound and a phase change layer formed of a GeSbTe or a AgInSbTe based phase change material for recording of data and reproducing of data is known from WO 2005/081242 and US 2004/0257968. Further examples of super-resolution optical media are described in WO 2004/032123 and by Tominaga et al., Appl. Phys. Lett. Vol. 73, No. 15, 12 October 1998.

For replicated DVDs it is known to write an individual code in a defined region of an inner lead-in area, known as a burst cutting area (BCA), as described in Annex K of the DVD physical specification. The BCA is created by a very powerful laser, for example by a ND:YAG or CO2 laser, which burns and darkens the aluminum or other reflective metal layer in the respective inner area of the prerecorded DVD. The marks created by this method are stripes, roughly 10 microns wide by 1200 microns long and provide a code in the form of a barcode, which contains up to 188 bytes.

DVD players can read the BCA code by rotating at a constant angular velocity (1440 rpm), moving the optical pick-up to the BCA area, focusing on the information surface, and using a special decoding circuit for decoding the much lower frequency barcode signal, as compared with the normal DVD HF data signal. A specific code in the burst cutting area can be used for copy protection or serialization systems.

### BRIEF SUMMARY OF THE INVENTION

The optical storage medium according to the invention comprises a read-only region and a re-writable region. The read-only region includes at least a substrate layer, an information layer, and a mask layer formed of a phase change material for providing a super resolution near field effect, which layers are arranged as a stack of layers. The re-writable region comprises at least a layer with a tracking structure for providing a tracking information for a pickup and the mask layer as contained in the read-only region, which covers the layer with the tracking structure for using the mask layer as the information layer of re-writable region.

The optical storage medium is in particular an optical disc, and in a preferred embodiment the re-writable region is an inner region of the optical disc, for example a reserved area, which does not contain any read-only data. An optical disc of this kind gives therefore a user the possibility, to write any user specific data onto an optical disc comprising read-only data (ROM disc).

The apparatus for recording and/or reading data from the optical disc comprises a pickup unit providing a laser beam for reading data from the read-only region with the super resolution near-field layer of the optical storage medium, and uses this laser beam for recording and/or reading data on the information layer of the re-writable region. The pickup unit comprises in particular a Blu-ray disc type pickup with a wavelength of 405 nm in accordance with the Blu-ray disc system, and which has a sufficient power for reading the data from the information layer by providing a super resolution near field effect (Super-RENS).

The optical storage medium is in a preferred embodiment a Super-RENS ROM disc which comprises a tracking structure of the re-writable region having a groove/land structure or a pressed pit structure for providing the tracking information, and the track pitch of that tracking structure is in correspondence with the track pitch of the Blu-ray disc system. The track pitch of the information layer of the read-only region is advantageously also in accordance with the Blu-ray disc system for reading the data of the information layer with a Blu-ray system pickup by utilizing a Super-RENS effect.

### BRIEF DESCRIPTION OF THE DRAWINGS

Preferred embodiments of the invention are explained now in more detail below by way of example with reference to a schematic drawing, which shows:
- Figure: An optical storage medium comprising a ROM information layer and a super resolution mask layer.

### DETAILED DESCRIPTION OF PREFERRED EMBODIMENTS

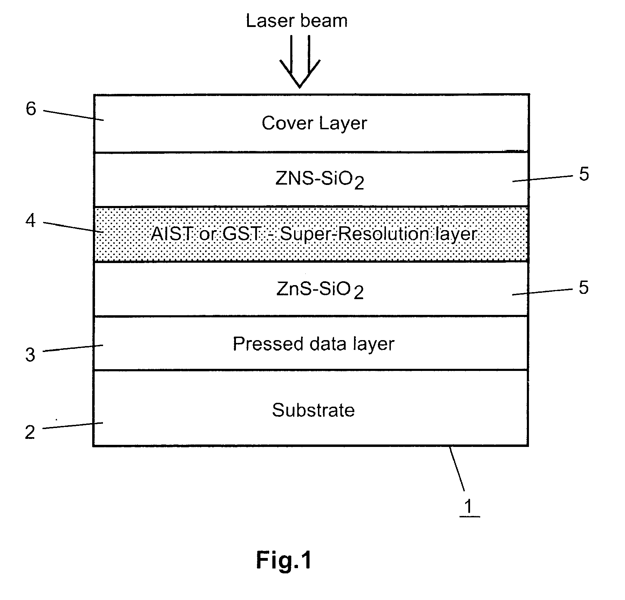

The storage medium 1 shown in the figure, an optical disc in this embodiment, comprises a first, a read-only region with a substrate layer 2, for example a polycarbonate layer, which represents the base layer, on which an information layer 3 is arranged. The information layer 3, a pressed data layer, comprises read-only (ROM) data, which layer is arranged as an embossed pit structure with a reflective metal coating for example. Above the information layer 3 a mask layer 4 is arranged, which comprises a phase change material providing a super resolution near field effect. As a phase change material for example a compound of AgInSbTe or GeSbTe is used. The figure shows the optical disc 1 in a cross-section of the first region.

Below and above the mask layer 4 advantageously protection layers 5 are arranged, which comprise for example the materials zinc sulfide and silicon dioxide: ZnS-SiO₂. These layers 2 - 5 are arranged as a stack and are covered by a cover layer 6 for a protection of the optical disc 1. For reading the data of the information layer 3, a laser beam is applied from the top of the figure, penetrating first the cover layer 6.

The optical disc 1 comprises further a second region, a re-writable region, and a layer with a tracking structure for providing a tracking information for an optical pickup, not shown in the figure. The layer with the tracking structure is also covered by the mask layer 4. Because the mask layer 4 comprises a phase change material, this layer is applied and used in the second region as a re-writable information layer. The rewritable region is advantageously a reserved area of the optical disc 1, for example an inner region. The tracking structure comprises in particular a groove/land structure or a pressed pit structure for providing the tracking information. The rewritable region may comprise in particular also a layer structure as used for a rewritable Blu-Ray disc (BD-RE disc).

The read-only region of the optical disc 1 is for example a Super-RENS ROM type disc being designed for reading data with a Blu-ray type pickup for reading of the ROM data. The information density of the data layer 3 can be arranged therefore with an information density being at least by a factor of three or four higher than present Blu-Ray discs.

For providing a super resolution near field effect of present phase change materials, for example AgInSbTe or GeSbTe, a laser power of about 1 Milli-Watt (mW), in particular in the range of 0,1 - 5 mW, depending on the rotational speed of the optical disc, is sufficient when using a blue laser diode of 405 nm. Therefore, the same phase change layer can be used for the optical storage medium, which is applied in the read-only region as a mask layer for the data layer, for an application in the rewritable region of the optical storage medium as the information layer. For both regions advantageously a pick-up using the same laser wavelength, in particular a blue laser with a wavelength of 405 nm, can be used.

It is known that locations of phase change materials of this kind mentioned above remain in a crystalline phase, when illuminated with a laser power as required for providing the super resolution near field effect. Therefore, with a slightly higher laser power, e.g. 5 mW, also a data track can be written on the phase change material being arranged in the re-writable region of the optical storage medium in form of amorphous marks.

The read-only region of the optical storage medium may have for example specific pressed pits providing the data information of the information layer, which has a track pitch, which is utilized also for the tracking structure of the re-writable region. In particular, a track pitch of 320 nm in accordance with the Blu-Ray disc system may used for both the read-only region and the re-writable region. The tracking information of the re-writable region has to be large enough to be readable and writable without using a super resolution near field effect.

For the read-only region alternatively a groove/land structure may be used for providing the tracking for a pickup, e.g. with a track pitch of 320 nm. This groove/land structure can be used then also for the re-writable region as the tracking structure. The mark length of the data which can be written in the re-writable region is of course larger than the mark length of the data present in the read-only region, because the super resolution near field effect is not applied in the re-writable region. The mark length of the data of the re-writable region can be in correspondence with the 2T standard mark length of the Blu-ray disc system for example, or can be larger.

For reading the data in the re-writable region, a low laser power has to be used to not destroy the information as included in the phase change layer, in particular a laser power below 1 mW depending on the rotational speed of the optical disc. The laser power for reading the data of the re-writable region can correspond for example with a laser power as used for present BD-RE discs. In particular, the pickup unit may use a laser power for reading the data of the read-only region and for writing data on the re-writable region in a range of 0,2 - 5 mW, and a laser power of below 1 mW for reading data in the re-writable region. The pickup unit may use the same laser power for reading the data of the read-only region and for writing data on the re-writable region.

In a further aspect of the invention, the phase change material of the read-only region may be utilized for writing additional information on the mask layer 4. The track pitch of the read-only information layer then has to be in the range of 320 nm, or larger. Here, also a Blu-Ray pickup unit can be used for writing the data, when marks with a mark length in accordance with a BD-RE are used for writing the data.

Of course this information is lost when the pickup unit reads the read-only data of the information layer, but writing additional information on the mask layer 4 could be an interesting feature for a user for providing individual labels for special parts of the read-only region. For example, a user may use such a label for the last viewed sequence of a film, which label is retained when the disc is changed, and which allows the user to find quickly the location where he wants to continue the movie.

An apparatus for recording and/or reading data from an optical storage disc 1 comprises a pickup unit which provides a light beam with an intensity sufficient for reading data from the read-only region by utilizing a super resolution near field effect, and an intensity being sufficient for recording data on the information layer of the re-writable region. This can be in particular a pickup unit comprising a Blu-Ray disc pickup in accordance with the Blu-Ray disc system.

The optical storage medium comprising data in a read-only region according to the invention provides therefore the possibility for a user or a manufacturer to store additional data for various applications on the storage medium.

Also other embodiments of the invention can be made by a person skilled in the art without departing from the spirit and scope of the invention. The invention is in particular not limited for a use with a pickup unit comprising a Blu-Ray disc type pick-up. The invention resides therefore in the claims herein after appended.

## Claims

1. Optical storage medium comprising
a read-only region with a substrate layer (2), an information layer (3), and a mask layer (4) comprising a phase change material providing a super resolution near field effect, arranged as a stack of layers (2-4), and
a re-writable region comprising a layer with a tracking structure for providing a tracking information, said tracking structure being covered by said mask layer (4) for using the mask layer (4) as the information layer of the re-writable region.

2. The optical storage medium of claim 1, **wherein** the optical storage medium is an optical disc (1) and the re-writable region is a reserved area of the optical disc (1) .

3. The optical storage medium of claim 2, **wherein** the re-writable region is an inner region of the optical disc (1) .

4. The optical storage medium of one of the claims 1, 2 or 3, **wherein** the tracking structure of the re-writable region comprises a groove/land structure or a pressed pit structure for providing the tracking information, and the track pitch of the tracking structure is in correspondence with the track pitch of the Blu-ray disc system.

5. The optical storage medium of claim 4, wherein the tracking structure comprises a pressed pit structure, and the pit length of the pressed pit structure is in correspondence with or larger than the 2T standard mark length of the Blu-ray disc system.

6. The optical storage medium of one of the claims 2 - 5, wherein the track pitch of the information layer (3) of the read-only region is in accordance with the Blu-ray disc system, for reading the data of the information layer (3) with a Blu-ray system pickup by utilizing a Super-RENS effect.

7. The optical storage medium of one of the claims 1 - 6, **wherein** the mask layer (4) of the read-only region and the information layer of the re-writable region comprise the same compound, for example AgInSbTe or GeSbTe.

8. Apparatus for recording and/or reading data from an optical disc in accordance with one of the claims 2 - 7, **wherein** the apparatus comprises a pickup unit providing a laser beam for reading data from the read-only region with the super resolution near-field layer of the optical storage medium, and using said laser beam for recording and/or reading data on the information layer of the re-writable region.

9. The apparatus of claim 8, **wherein** the pickup unit uses for reading the data of the read-only region and for writing data on the re-writable region a laser light power in a range of 0,2 - 5 mW, and uses a laser power below 1 mW for reading data in the re-writable region.

10. The apparatus of claim 8 or 9, **wherein** the pickup unit comprises a Blu-ray disc type pickup in accordance with the Blu-ray disc system.
